# EUROPÄISCHE PATENTSCHRIFT

(11) **EP 2 625 084 B1**
(45) Veröffentlichungstag und Bekanntmachung des Hinweises auf die Patenterteilung: **09.11.2016**
(21) Anmeldenummer: 11819156.8
(22) Anmeldetag: 09.09.2011
(51) Int. Cl.: B62B 3/14, B21F 27/12, B21F 45/00

(54) **AUS WENIGSTENS ZWEI WANDELEMENTEN GEBILDETER VERBUND**
ASSEMBLY FORMED OF AT LEAST TWO WALL ELEMENTS
ASSEMBLAGE CONSTITUÉ D'AU MOINS DEUX ÉLÉMENTS DE PAROI

(30) Priorität: 01.11.2010 DE 102010049882; 21.09.2010 DE 202010012802 U; 15.09.2010 DE 102010045455
(43) Veröffentlichungstag der Anmeldung: 14.08.2013
(73) Patentinhaber: Eberlein, Martin, 89358 Kammeltal (DE)
(72) Erfinder: Eberlein, Martin, 89358 Kammeltal (DE)
(86) Internationale Anmeldenummer: PCT/DE2011/001717
(87) Internationale Veröffentlichungsnummer: WO 2012/034556

(56) Entgegenhaltungen:
- FR-A- 1 372 459
- US-A- 3 963 255
- US-B1- 6 203 035
- US-E- R E32 453

## Beschreibung

Die Erfindung betrifft einen aus einem ersten und aus wenigstens einem zweiten Wandelement gebildeten Verbund gemäß dem Oberbegriff von Anspruch 1.

Es sind Verbünde bekannt, deren Wandelemente als Drahtgitterkonstruktionen gestaltet sind. Bei dieser Art von Konstruktionen kreuzen sich die aus Drahtstücken gebildeten und miteinander verschweißten Verstärkungselemente derart, dass beispielsweise die vertikalen Verstärkungselemente auf den horizontalen Verstärkungselementen aufliegen oder umgekehrt. Bringt man zwei Wandelemente in eine raumsparende Anordnung, befinden sich beispielsweise die horizontalen Verstärkungselemente jenes Wandelementes, das an das andere Wandelement herangeführt und in die raumsparende Anordnung gebracht ist, in wenigstens einem Zwischenraum, der von horizontalen Verstärkungselementen des anderen Wandelementes gebildet ist, während die vertikalen Verstärkungselemente der beiden Wandelemente für sich jeweils einen weiteren separaten Raumbereich beanspruchen, also außerhalb des vorab genannten Zwischenraumes liegen. Dies bedeutet, dass sich die Verstärkungselemente der beiden Wandelemente in raumsparender Anordnung in drei unterschiedlichen Raumbereichen befinden, die ein Paket bestimmter Dicke bilden. Gleiches gilt analog, wenn der wenigstens eine Zwischenraum von vertikalen Verstärkungselemeten gebildet und zur Aufnahme von vertikalen Verstärkungselementen des anderen Wandelementes bestimmt ist.

In der US 6,203,035 B1 sind zwei Wandelemente in Form von Tablettwagen beschrieben. Diese Wagen weisen vertikale und horizontale Verstärkungselemente auf, die kreuzweise miteinander verbunden sind. Schiebt man zwei derartige Wagen ineinander, was einer raumsparenden Anordnung gleichkommt, befinden sich die vertikalen Verstärkungselemente des ersten Wagens in einem ersten Raumbereich und die horizontalen Verstärkungselemente in einer Anzahl von zweiten Raumbereichen. Beim zweiten Wagen befinden sich dessen vertikale Verstärkungselemente in einem weiteren ersten Raumbereich und die horizontalen Verstärkungselemente in weiteren zweiten Raumbereichen.

Typische Vertreter von Verbünden der hier vorliegenden Art sind auch in Form von sogenannten "Kindersitzklappen" bekannt, die bei ineinanderschiebbaren, also stapelbaren Einkaufswagen Verwendung finden. Bei der überwiegenden Anzahl von Kindersitzklappen sind die Rückwand als größeres Wandelement und die Rückenlehne als kleineres Wandelement aus Draht und der Sitz als Kunststoffteil gefertigt. Es gibt aber auch komplett aus Kunststoff bestehende Kindersitzklappen oder solche aus Kunststoff und Draht, wobei Drahtstäbe, Flächenteile, aus Kunststoff bestehende Verstärkungsrippen oder Verstärkungsstege jene Verstärkungselemente bilden, die eine Herstellung der Kindersitzklappen ermöglichen.
Bei Kindersitzklappen, deren Rückwand als größeres Wandelement und deren Rückenlehne als kleineres Wandelement aus Drahtstäben bestehen, sind die Drahtstäbe kreuzweise miteinander verschweißt. Dickere und dünnere Drahtstäbc, ob kreuzend oder nicht, wechseln sich ab und die Anordnung dieser Stäbe lässt ebenfalls drei Raumbereiche entstehen. Im ersten Raumbereich befinden sich die vertikalen Drähte der Rückwand. Im zweiten Raumbereich sind die horizontalen Drähte der Rückwand und der Rückenlehne angesiedelt, während sich im dritten Raumbereich die vertikalen Drähte der Rückenlehne befinden. Dies führt dazu, dass in jenem gemeinsamen Bereich, in dem die eben erwähnten Drähte in zusammengefaltetem Zustand der Kindersitzklappe ein gemeinsames Paket bilden, die Dicke des so gebildeten Paketes erheblich ist. Ein noch dickeres Paket erhält man bei aus Kunststoff gebildeten Kindersitzklappen, da wesentlich höhere Verstärkungselemente in Form von Rippen und Stegen erforderlich sind. Die Dicke der eben beschriebenen Pakete beeinflusst in erheblichem Maße die Stapelabstände zwischen einzelnen Einkaufswagen, wenn diese zu einem Stapel ineinander geschoben sind. Je dicker das Paket, desto weniger Einkaufswagen lassen sich auf einer vorbestimmten Fläche als Stapel abstellen. Dies führt beim Versand solcher Wagen zu einer wesentlichen Erhöhung der Versandkosten. Kindersitzklappen, welche die eben beschriebenen Nachteile aufweisen, sind beispielsweise in der US 3,963,255 A und in der FR 1,372,459 A näher beschrieben.

Durch die US Re.32,453 ist schließlich ein Einkaufswagen bekannt, dessen als Verbund gestalteter Kindersitz aus einem behälterförmigen ersten Wandelement und einem den Raum des ersten Wandelementes verschließenden zweiten Wandelement gebildet ist. Abgesehen davon, dass das erste Wandelement nicht flächig, sondern behälterförmig gestaltet ist, bildet das zweite Wandelement in seiner das erste Wandelement verschließenden Lage eine Rückenlehne für ein im Kindersitz befindliches Kind. Während beim zweiten Wandelement die vertikalen Verstärkungselemente entlang einer Ebene kreuzweise mit den horizontalen Verstärkungselementen verbunden sind, befinden sich beim ersten Wandelement die vertikalen und horizontalen Verstärkungselemente auf voneinander getrennten Ebenen. Mit dem zweiten Wandelement soll keine platzsparende Anordnung mit dem ersten Wandelement erreicht werden. Vielmehr dient das zweite Wandelement ausschließlich zum Verschließen des ersten Wandelementes, um somit einen behälterförmigen Kindersitz zu schaffen.

Es ist Aufgabe der Erfindung, bei einem Verbund der eingangs genannten Art die Verstärkungselemente der Wandelemente so zu platzieren, dass in raumsparender Anordnung der Wandelemente die Dicke des durch die Wandelemente gebildeten Paketes verringert werden kann.

Die aufgefundene Lösung ist im kennzeichnenden Teil des Anspruches 1 beschrieben.

Der Vorteil der aufgefundenen Lösung besteht darin, dass sich in der raumsparenden Anordnung der beiden Wandelemente deren horizontale und vertikale Verstärkungselemente nur noch in zwei unterschiedlichen Arten von Zwischenräumen und damit nur noch in zwei Raumbereichen befinden. Dadurch ist die Dicke des durch die Wandelemente gebildeten Paketes zumindest in deren gemeinsamen Bereich geringer als bei gleichartigen Verbünden, die zum Stand der Technik gehören.

Bezogen auf einen Verbund in Form einer Kindersitzklappe besteht der Vorteil der Erfindung ebenfalls in der konsequenten gegenseitigen Nutzung der beschriebenen Zwischenräume, so dass ein Aufbauen der Verstärkungselemente, wie dies beim Stand der Technik noch erfolgt, vermieden wird. Sowohl die Verstärkungselemente als auch der Sitz, sowie die Lagerung oder die beiden Lager für die Rückenlehne lassen sich dadurch in gerade mal zwei Raumbereichen unterbringen, was in äußerst zweckmäßiger Weise zu einer erheblichen Reduzierung der Dicke der gefalteten Kindersitzklappe führt. In vorteilhafter Weise lassen sich dadurch alle Einkaufswagen, die mit der vorgeschlagenen Kindersitzklappe ausgestattet sind, viel enger und damit viel platzsparender in Reihen abstellen, was beim Versand der Wagen zu erheblichen Einsparungen bei den Versandkosten führt.

Die Erfindung wird anhand von Ausführungsbeispielen näher erläutert. Es zeigt
- Fig. 1: ein größeres und ein kleineres Wandelement;
- Fig. 2: zwei Raumbereiche;
- Fig. 3, a) bis d): empfehlenswerte Anwendungsfälle für die Praxis;
- Fig. 4: ein für einen Einkaufswagen geeigneten Anwendungsfall in Form einer Kindersitzklappe;
- Fig. 5: die Anordnung einzelner Kindersitzklappen, wenn diese mit ihren Einkaufswagen platzsparend ineinander geschoben sind;
- Fig. 6: eine Kindersitzklappe entgegen der Schieberichtung eines Einkaufswagens betrachtet;
- Fig. 6a: eine Einzelheit aus Fig. 6;
- Fig. 7: eine Draufsicht auf die in Fig. 6 gezeigte Kindersitzklappe sowie
- Fig. 8: die gleiche Kindersitzklappe in Seitenansicht und in aufgeklappter Gebrauchslage.

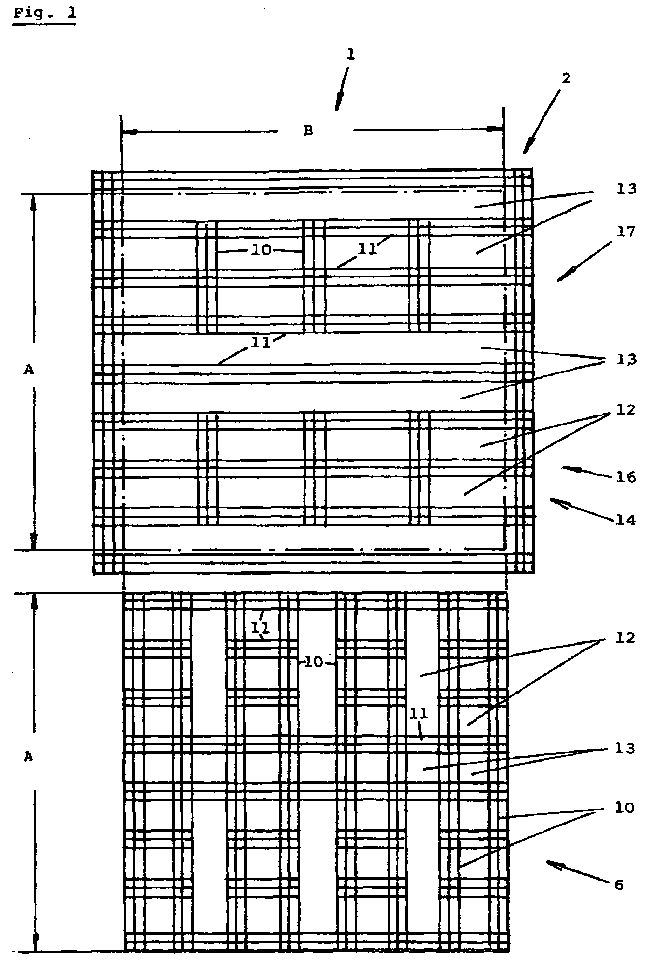

Fig. 1 zeigt das Grundprinzip der Erfindung. Es sind zwei Wandelemente 2, 6 schematisch dargestellt. Einzelheiten, die für die Erfindung uninteressant sind, fehlen. Die Zeichnung zeigt im Beispiel ein größeres Wandelement 2 und darunter ein kleineres Wandelement 6. Es können beispielsweise auch zwei Wandelemente 2 oder 6 gleicher Größe Verwendung finden, die zum Beispiel einen gleichen rechteckigen Grundriss aufweisen und in der raumsparenden Anordnung sich kreuzend oder überlappend angeordnet sind. Die Wandelemente 2, 6 weisen eine Anzahl vertikal angeordneter und eine Anzahl horizontal angeordneter Verstärkungselemente 10, 11 auf. Im Beispiel sind die Verstärkungselemente 10, 11 durch Stäbe, beispielsweise durch Drähte gebildet, die kreuzweise angeordnet miteinander verschweißt sind und somit eine Drahtgitterkonstruktion bilden. Im Beispiel sind ferner die Verstärkungselemente 10, 11 in Dreiergruppen angeordnet. Andere Gruppierungen (Zweier-, Vierergruppen usw.) sind möglich. Auch jeweils einzelne Stäbe, die dann keine Gruppe mehr bilden, lassen sich entsprechend anordnen. Um als Verstärkungselement 10 und/oder 11 eingeordnet zu werden gilt folgendes: Jedes Verstärkungselement 10 ist mit mindestens zwei Verstärkungselementen 11 und jedes Verstärkungselement 11 ist mit mindestens zwei Verstärkungselementen 10 ortsfest verbunden. Dies gilt auch für alle nachfolgenden Ausführungsbeispiele. In der Zeichnung befinden sich bei beiden Wandelementen 2, 6 die horizontalen Verstärkungselemente 11 in der Bildebene und die vertikalen Verstärkungselemente 10 liegen auf den horizontalen Verstärkungselementen 11 auf, wobei die Verstärkungselemente 10, 11, wie aus der Zeichnung ersichtlich, unterschiedlich lang sind. Zwischen den gruppenweise angeordneten horizontalen Verstärkungselementen 11 sind Zwischenräume 13 gebildet. Weitere Zwischenräume 12 erhält man durch die gruppenweise angeordneten vertikalen Verstärkungselemente 10. Die Zwischenräume 12, 13 sind geometrisch bestimmt durch die Länge der Verstärkungselemente 10, 11, durch deren Abstand und durch die Dicke der Verstärkungselemente 10, 11. Die räumliche Ausdehnung der Zwischenräume 12, 13 kann somit beispielsweise quaderförmig sein, was bei einer rechtwinkligen Anordnung der Verstärkungselemente 10, 11 zutrifft. Von oben auf die Bildebene betrachtet liegen die Zwischenräume 13 bei beiden Wandelementen 2, 6 tiefer als die Zwischenräume 12. Die Zwischenräume 12, 13 sind somit, bezogen auf die vorab genannte Bildebene, höhen- oder tiefenversetzt zueinander angeordnet. Hebt man nun gedanklich das kleinere Wandelement 6 von der Bildebene aus nach oben an und fügt es zentral von oben her nach unten in das größere Wandelement 2, um die raumsparende Anordnung einzunehmen, so befinden sich die vertikal verlaufenden Verstärkungselemente 10 des kleineren Wandelementes 6 ganz oder teilweise in Zwischenräumen 12, die zwischen vertikal verlaufenden Verstärkungselementen 10 am größeren Wandelement 2 gebildet sind, um mit dessen vertikalen Verstärkungselementen 10 beispielsweise einen zweiten gemeinsamen Raumbereich 17 zu beanspruchen. Zugleich befinden sich in der raumsparenden Anordnung auch die horizontal angeordneten Verstärkungselemente 11 des kleineren Wandelementes 6 ganz oder teilweise in Zwischenräumen 13, die zwischen horizontal verlaufenden Verstärkungselementen 11 am größeren Wandelement 2 gebildet sind, um mit dessen horizontalen Verstärkungselementen 11 einen ersten gemeinsamen Raumbereich 16 zu beanspruchen. Die Zeichnung zeigt, dass unterschiedlich große Zwischenräume 12, 13 gebildet sind, wobei deren Größe von der jeweils gewählten Gitterkonstruktion abhängt. Man kann sich leicht vorstellen, dass im Sinne der Erfindung unter- schiedliche Gitterformen verwirklichbar sind. Im größeren Wandelement 2 ist der Umriss des kleineren Wandelementes 6 strichpunktiert eingezeichnet. In zusammengefügtem Zustand von größerem und kleinerem Wandelement 2, 6 nimmt das kleinere Wandelement 6 diese Lage ein. Beide Wand-elemente 2, 6 beanspruchen den durch die Maße A und B bestimmten gemeinsamen Bereich 14 und bilden einen Verbund 1, wobei Ver- stärkungselemente 10, 11 nicht nur innerhalb des gemeinsamen Bereiches 14 angeordnet sind, sondern auch über den gemeinsamen Bereich hinausragen können, so dass diese sich nur teilweise in Zwischenräumen 12, 13 befinden.

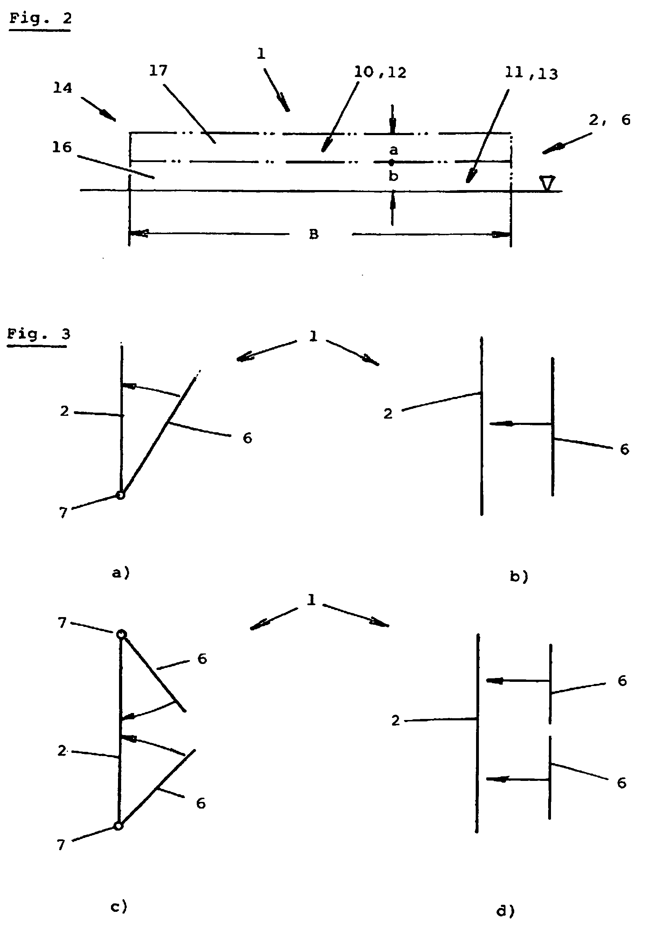

In Fig. 2 sind zur weiteren näheren Beschreibung der Erfindung die beiden in Fig. 1 erwähnten Raumbereiche 16,17 dargestellt. In zusammengefügtem Zustand der Wandelemente 2, 6 befinden sich die horizontalen Verstärkungselemente 11 sowie der wenigstens eine Zwischenraum 13 in einem ersten Raumbereich 16 beispielsweise mit der Dicke b und die vertikalen Verstärkungselemente 10 sowie der wenigstens eine Zwischenraum 12 in einem zweiten Raumbereich 17 zum Beispiel mit der Dicke a. Die Zwischenräume 12, 13 sind somit, entlang ihrer Dicke betrachtet, versetzt zueinander angeordnet, was auch durch die Maße a und b zum Ausdruck kommt. Dies gilt auch für alle nachfolgenden Ausführungsbeispiele. Innerhalb des gemeinsamen Bereiches 14 können sich an mindestens einem der Wandelemente 2 und/oder 6 durchaus weitere, nicht näher dargestellte Bauteile befinden, die, selbst wenn sie ebenfalls verstärkend wirken können, primär andere Funktionen als die Verstärkungselemente 10, 11 zu erfüllen haben und so ausgebildet und so angeordnet sind, dass diese sich in der raumsparenden Anordnung der Wandelemente 2, 6 in wenigstens einem der Zwischenräume 12, 13 befinden. Solche Funktionsteile können z. B. durch Anschlagteile, Stoßdämpfer, Typenschilder, Ösen, Haken, Einhängeteile, Verbindungselemente, Lagerungsteile usw. gebildet sein. Gleiches gilt auch für alle nachfolgend beschriebenen und gezeichneten Ausführungsbeispiele. Mit der Darstellung der beiden Raumbereiche 16 und 17 lässt sich der Unterschied zu Verbünden 1 gemäß des Standes der Technik treffend darstellen, die im Gegensatz zur hier vorliegenden Erfindung, mindestens drei Raumbereiche aufweisen.

Fig. 3 zeigt in den Einzeldarstellungen a) bis d) verschiedene, in Seitenansicht dargestellte Verbünde 1 von Wandelementen 2, 6, die sich besonders für praktische Anwendungsfälle empfehlen. Einzeldarstellung a) zeigt, dass das kleinere Wandelement 6 über eine Achse 7 bewegbar am größeren Wandelement 2 angeordnet sein kann. Der Pfeil zeigt, dass das kleinere Wandelement 6 durch Heranschwenken an das größere Wandelement 2 in die raumsparende Anordnung überführbar ist.
Einzeldarstellung b) zeigt ein einzeln vorliegendes größeres Wandelement 2 und ein einzeln vorliegendes kleineres Wandelement 6. In Pfeilrichtung lässt sich das kleinere Wandelement 6 durch Hinführen an das größere Wandelement 2 in die raumsparende Anordnung überführen. Einzeldarstellung c) vermittelt ein größeres Wandelement 2, an dem zwei kleinere Wandelemente 6 über je eine Achse 7 mit dem größeren Wandelement 2 verbunden sind. Die Pfeile zeigen wiederum, dass die beiden kleineren Wandelemente 6 durch Heranschwenken an das größere Wandelement 2 in die raumsparende Anordnung überführbar sind.
Schließlich zeigt Einzeldarstellung d) ein größeres Wandelement 2 und zwei kleinere Wandelemente 6, die jeweils einzeln vorliegen. In Pfeilrichtung lassen sich die kleineren Wandelemente 6 durch Hinführen an das größere Wandelement 2 in eine raumsparende Anordnung überführen.

Das Prinzip entsprechend der Einzeldarstellung a) ist auch bei faltbaren Kindersitzklappen anwendbar, so wie diese bei bekannten Einkaufswagen üblich und nachfolgend näher beschrieben sind.

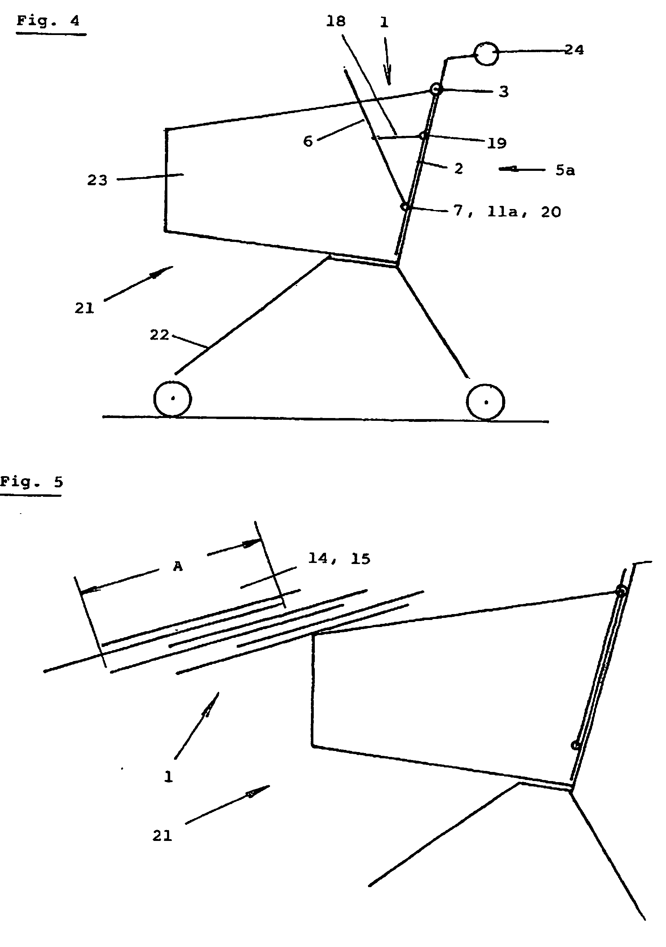

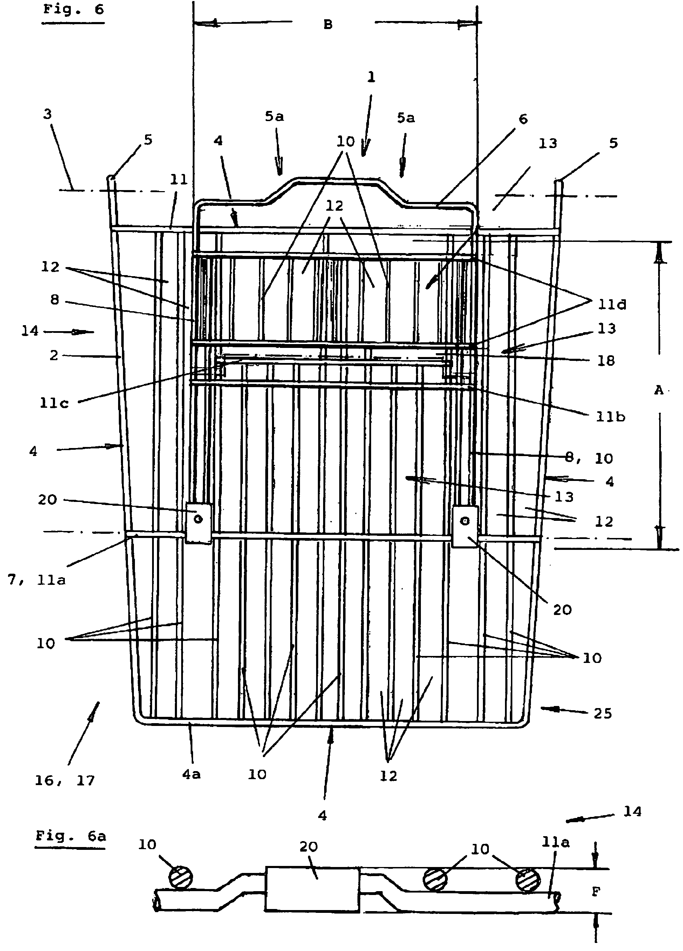

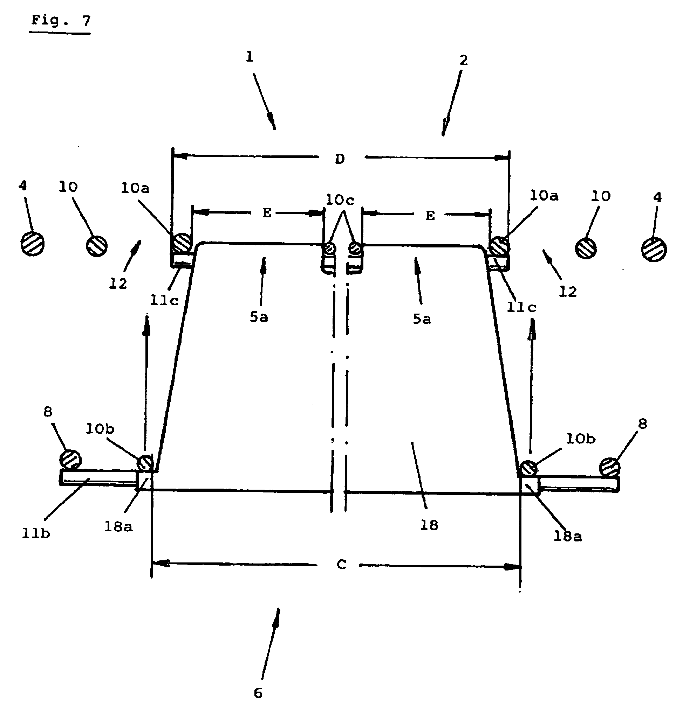

Fig. 4 zeigt deshalb einführend zunächst einen Einkaufswagen 21 der üblichen Bauart mit einer in Gebrauchslage befindlichen Kindersitzklappe 1, die einen Verbund 1 bildet. Der Einkaufswagen 21 ist in bekannter Weise mit gleichen Wagen 21 in Reihen stapelbar. Er weist ein Fahrgestell 22, einen Korb 23 und eine Schiebeeinrichtung 24 auf. Die bekanntermaßen rückwärtige Öffnung des Korbes 23 wird durch die Kindersitzklappe 1 verschlossen, die in bekannter Weise um eine oben liegende horizontale Achse 3, zum Zwecke des Stapelns mehrerer Einkaufswagen 21, nach oben in das Korbinnere schwenkbar ist. Die Kindersitzklappe 1 weist als größeres Wandelement 2 eine Rückwand 2 auf, die um die horizontale Achse 3 schwenkbarbar mit dem Korb 23 verbunden ist und in bekannter Weise zwei Beinlöcher 5a für die Beine eines auf einem Sitz 18 befindlichen Kleinkindes aufweist. Die Kindersitzklappe 1 ist mit einer Rückenlehne 6 ausgestattet, die das kleinere Wandelement 6 bildet und die um eine im unteren Bereich der Rückwand 2 befindliche horizontale Achse 7 bewegbar verbunden ist. Die Rückenlehne 6 kann auch mit Hilfe zweier Lager 20, siehe Fig. 6, 6a und 7, mit der Rückwand 2 verbunden sein. Der Sitz 18 ist in ebenfalls bekannter Weise mit der Rückwand 2, also mit dem größeren Wandelement 2 und mit der Rückenlehne 6, dem kleineren Wandelement 6, um eine horizontale Achse 19 bewegbar und schiebebeweglich mit diesen verbunden. Die eben geschilderte Art der Verbindung des Sitzes 18 mit der Rückwand 2 und mit der Rückenlehne 6 erlaubt in bekannter Weise zwei unterschiedliche Befestigungsweisen. Sowohl die Schiebebeweglichkeit als auch die Bewegbarkeit um eine horizontale Achse 19 sind bei beiden Konstruktionsprinzipien in kinematisch umkehrbarer Weise möglich.

Fig. 5 zeigt in schematisch dargestellter Weise eine Anzahl von Kindersitzklappen 1 in jener Lage, die diese in gestapeltem Zustand von mehreren Einkaufswagen einnehmen. Der Deutlichkeit wegen ist nur der letzte in einen Stapel von Einkaufswagen 21 einzuschiebende Einkaufswagen 21 dargestellt, der die Kindersitzklappe 1 des unmittelbar vorausbefindlichen Einkaufswagens 21 angehoben hat, was in Folge auf alle weiteren vorausbefindlichen Einkaufswagen 21 zutrifft. In der Zeichnung erkennt man, dass die Kindersitzklappen 1, jeweils einen Verbund 1 bildend, raumsparend zusammengefaltet sind und dass mit A die Länge eines gemeinsamen Bereiches 14 der nachfolgend beschriebenen Verstärkungselemente 10 und 11 usw. angegeben ist. Die Verstärkungselemente 10 und 11 usw. der einzelnen zusammengefalteten Kindersitzklappen 1 bilden somit in dieser raumsparenden Anordnung jeweils ein Paket 15 mit einer bestimmten Dicke.

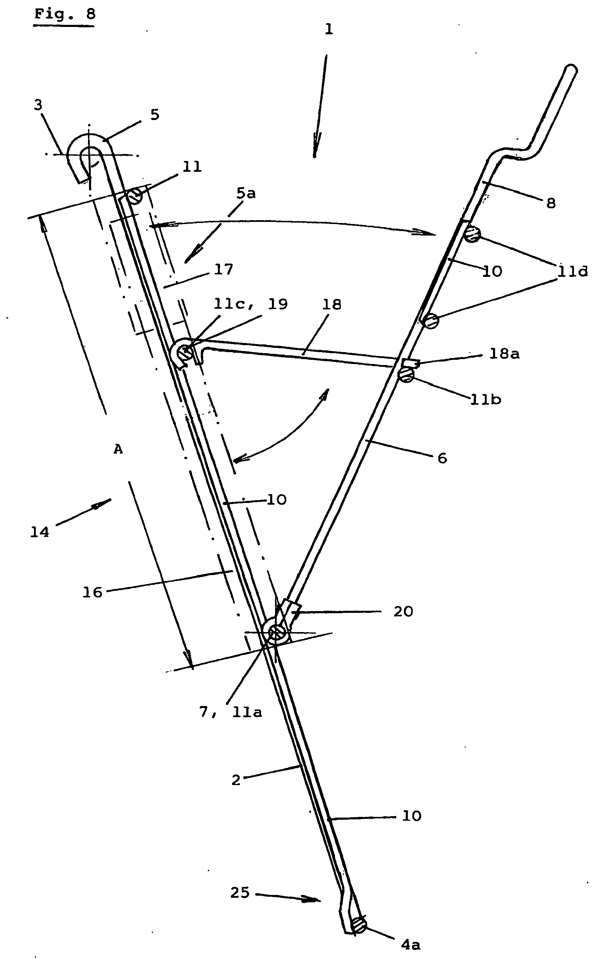

Fig. 6 zeigt die Kindersitzklappe 1 in einer Ansicht entgegen der Schieberichtung eines Einkaufswagens 21. Die Kindersitzklappe 1 ist als Drahtgitterkonstruktion mit einem als Kunststoffteil gestalteten Sitz 18 dargestellt. Die Rückwand 2, die Rückenlehne 6 und der Sitz 18 sind so miteinander verbunden, wie bereits in Fig. 4 beschrieben. Innerhalb des Rahmens 4 der Rückwand 2, mit Ausnahme der beiden Einhängevorrichtungen 5, sind vertikale und horizontale Verstärkungselemente 10, 10a und 11, 11a, 11b usw. vorgesehen, siehe auch Fig. 7. Anhand der Zeichnung sind auch die horizontalen und vertikalen Verstärkungselemente 10, 10b und 11, 11a usw. der Rückenlehne 6 ersichtlich, zu denen auch die Umrandung 8 gehört, die in weiterem Sinne ebenfalls zwei Verstärkungselemente 10 bildet, siehe ebenfalls Fig. 7. Am unteren Abschnitt 4a des Rahmens 4 der Rückwand 2 können entweder die Verstärkungselemente 10 um die Materialstärke d des Rahmens 4 abgeknickt sein, z. B. parallel verlaufend, wie gezeichnet oder es kann der untere Bereich des Rahmens 4 entgegengesetzt abgeknickt sein, damit die Verstärkungselemente 10 geradlinig und über Kreuz durch Punktschweißen mit dem unteren Abschnitt 4a des Rahmens 4 verschweißt werden können, siehe auch Fig. 8. Diese Abknickungen 25 liegen außerhalb des gemeinsamen Bereiches 14, der durch die Maße A und B vorgegeben ist.

Die in Abständen angeordneten Verstärkungselemente 10, 10a, 10b bilden Zwischenräume 12 und durch die in Abständen vorgesehene Anordnung der Verstärkungselemente 11, 11a usw. sind Zwischenräume 13 gebildet. Die vertikalen Verstärkungselemente 10, 10b der Rückenlehne 6 befinden sich dabei in zusammengefaltetem Zustand der Kindersitzklappe 1, also in deren raumsparender Anordnung, ganz oder teilweise in an der Rückwand 2 befindlichen Zwischenräumen 12, die an der Rückwand 2 zwischen vertikal verlaufenden Verstärkungselementen 10, 10a gebildet sind, während sich in der raumsparenden Anordnung zugleich auch die horizontal angeordneten Verstärkungselemente 11b und 11d der Rückenlehne 6 ganz oder teilweise in Zwischenräumen 13 befinden, die zwischen horizontal verlaufenden Verstärkungselementen 11, 11a, 11c an der Rückwand 2 gebildet sind, siehe ebenfalls Fig. 7. Das Verstärkungselement 11b ist zum Stützen des Sitzes 18 vorgesehen, während die Verstärkungselemente 11d zusammen mit kurzen Verstärkungselementen 10 eine an der Rückenlehne 6 befindliche Anlehnfläche für den Rücken eines Kindes bilden. Das Eintauchen von vertikalen Verstärkungselementen 10, 10a, 10b in dafür vorgesehene Zwischenräume 12 sowie das Eintauchen der Verstärkungselemente 11, 11b und 11d in dafür vorgesehene Zwischenräume 13 wird dadurch erzielt, dass die infrage kommenden Verstärkungselemente 10, 11 usw. der Rückwand 2 und der Rückenlehne 6 im Versatz angeordnet sind. Im Beispiel umfassen die beiden ein- oder zweistückig ausgebildeten Lager 20 das zur Rückwand 2 gehörende Verstärkungselement 11a mit leichtem Spiel und sind jeweils mit den beiden äußeren Verstärkungselementen (8), 10 fest verbunden, welche die Rückenlehne 6 seitlich begrenzen, siehe auch Fig. 6a. Die Nutzung der Zwischenräume 12 und 13 wird in zusammengefaltetem, also in raumsparendem Zustand der Kindersitzklappe 1 erreicht. Weitere, der Deutlichkeit wegen hier nicht eingezeichnete Verstärkungselemente 10, 11 können der Kindersitzklappe 1 angehören, ohne näher beschrieben zu sein und ohne den Rahmen der Erfindung zu verlassen. Die durch Buchstaben erweiterten Positionszahlen 10 und 11 dienen lediglich der besseren Unterscheidung. Letztendlich sind alle diese Teile vertikale und horizontale Verstärkungsteile 10, 11.

Ergänzend zu Fig. 6 zeigt Fig. 6a in einer Draufsicht und im Detail das Verstärkungselement 11a mit einem der beiden Lager 20. Damit die Lager 20 in raumsparender Anordnung von Rückwand 2 und Rückenlehne 6 nicht über die Rückwand 2 und die Rückenlehne 6 hinausragen, ist es zweckmäßig, das Verstärkungselement 11a an jenen Stellen, an denen die Lager 20 vorgesehen sind, in Richtung zu den Verstärkungselementen 10, die mit dem Verstärkungselement 11a verbunden sind, so tief abzuknicken, dass die Dicke F der beiden Lager 20 nicht größer ist als die Summe der Dicke des Verstärkungselementes 11a und der Dicke des stärksten Verstärkungselementes 10, das mit dem Verstärkungselement 11a verbunden ist. Aus der Zeichnung geht dieser Zusammenhang deutlich erkennbar hervor.

Fig. 7 zeigt in einer reduzierten Schnittdarstellung und in einer Draufsicht die in Fig. 6 beschriebene Kindersitzklappe 1 in aufgeklappter Gebrauchslage. Die Rückenlehne 6 ist durch die Umrandung 8 angedeutet. Der Rahmen 4 stellt andeutungsweise die Rückwand 2 dar. Der Sitz 18 ist auf dem als horizontale Achse dienenden, der Rückwand 2 angehörenden Verstärkungselement 11c bewegbar gelagert. Er liegt mit seiner gegenüberliegenden Seite auf dem als Stütze dienenden Verstärkungselement 11b auf, das der Rückenlehne 6 angehört und hintergreift in bekannter Weise mit je einem Vorsprung 18a jeweils ein der Rückenlehne 6 angehörendes, dem Sitz 18 am nächsten liegendes Verstärkungselement 10b, so dass der Sitz 18 gegen Lösen gesichert ist. An den beiden Enden des Verstärkungselementes 11c befinden sich je ein Verstärkungselement 10a, die mit dem Verstärkungselement 11c verbunden, zusammen mit zwei mittigen Verstärkungselementen 10c die beiden Beinlöcher 5a bilden, die sich in der Rückwand 2 befinden und deren Breite durch die Maße E ersichtlich ist. Der lichte Abstand C der beiden von den Vorsprüngen 18a hintergriffenen Verstärkungselemente 10b der Rückwand 6 ist größer als die Länge D des Verstärkungselementes 11c. Bringt man die Rückenlehne 6 in die raumsparende Anordnung, in der sie die Nichtgebrauchslage einnimmt, wandern die von den Vorsprüngen 18a hintergriffenen Verstärkungselemente 10b, siehe Pfeile, in Zwischenräume 12, die sich zu beiden Seiten an die Enden des Verstärkungselementes 11c anschließen und durch die dort paarweise angeordneten Verstärkungselemente 10, 10a der Rückwand 2 gebildet sind. In der raumsparenden Anordnung der Kindersitzklappe 1 befinden sich dann die beiden von den Vorsprüngen 18a hintergriffenen Verstärkungselemente 10b der Rückenlehne 6 in je einem an der Rückwand 2 befindlichen Zwischenraum 12.

In einer Seitenansicht zeigt Fig. 8 die in Fig. 6 beschriebene Kindersitzklappe 1 in aufgeklapptem Zustand, also in der Gebrauchslage. Die Rückwand 2 ist in jener Lage dargestellt, wie diese am Einkaufswagen 21 montiert ist. Die Rückwand 2, als größeres Wandelement 2, schließt zu diesem Zweck oben mit zwei Einhängungen 5 ab. Den oberen Rand der Rückwand 2 bildet im Beispiel ein horizontales Verstärkungselement 11. Weiter unten folgt ein horizontales Verstärkungselement 11c, welches die horizontale Achse 19 für den Sitz 18 bildet. Im unteren Bereich der Rückwand 2 ist ein die beiden Seiten 4 der Rückwand 2 verbindendes horizontales Verstärkungselement 11a vorgesehen, welches die horizontale Achse 7 für die Rückenlehne 6 und für die beiden Lager 20 bildet. Die Beinlöcher 5a begrenzend führen äußere und zwei mittige vertikale Verstärkungselemente 10a, 10c, siehe Fig. 7, vom oberen zum unteren Rand 4 der Rückwand 2. Innerhalb des Bereiches 14 sind, mit Ausnahme der beiden mittigen Verstärkungslemente 10c, die anderen Verstärkungselemente 10 von unten nach oben nur bis zum Verstärkungselement 11c geführt. Horizontal werden die Beinlöcher 5a von den horizontalen Verstärkungselementen 11 und 11c und vertikal von Verstärkungselementen 10a, 10c begrenzt. Der Sitz 18 ist auf das Verstärkungselement 11c schnappschlüssig aufgesteckt. Der Sitz 18 liegt ferner mit seinem hinteren Ende am Verstärkungselement 11b, das sich an der Rückenlehne 6 befindet, auf und hintergreift mit seinen Vorsprüngen 18a die Verstärkungselemente 10b, siehe Fig. 7. Die Rückenlehne 6, als kleineres Wandelement 6, stützt sich umgekehrt an den Vorsprüngen 18a ab, so dass die Rüclkenlehne 6 in bekannter Weise nur bis zu einer bestimmten Endlage aufgeklappt werden kann. Oberhalb des Verstärkungselementes 11b sind an der Rückenlehne 6 zwei auf Abstand gehaltene horizontale Verstärkungselemente 11d vorgesehen, die mit kurzen vertikalen Verstärkungselementen 10 verbunden sind. Die Umrandung 8 der Rückenlehne 6 ist oben nach hinten abgewinkelt, damit dieser Abschnitt, der außerhalb des gemeinsamen Bereiches 14 liegt, dem horizontalen Verstärkungselement 11, das sich an der Rückwand 2 befindet, dann ausweichen kann, wenn die Kindersitzklappe 1 zusammengefaltet ist. Die Rückenlehne 6 kann durchaus noch einen oder zwei weitere Verstärkungselemente 11 aufweisen, die bei der Rückenlehne 6 zusätzlich verstärkend wirken können. Strichpunktiert sind die Raumbereiche 16 und 17 dargestellt. Zur besseren Erkennbarkeit sind die Raumbereiche 16 und 17 dicker dargestellt als diese in Wirklichkeit sind. Die tatsächliche Dicke der Raumbereiche 16 und 17 und deren räumliche Ausdehnung wird letztendlich durch die Dicken oder Stärken der im gemeinsamen Bereich 14 befindlichen, vorab beschriebenen Bauteile 8, 10, 11 usw., 18 und 20 und durch das gegenseitige Eintauchen dieser Teile in zusammengefaltetem Zustand der Kindersitzklappe 1 bestimmt, wobei sich dabei der Sitz 18 innerhalb von Zwischenräumen 12 und/oder 13 befindet.
Anstelle der eben beschriebenen, aus Draht gefertigten Verstärkungselemente 10, 11 usw. können auch solche aus Flächenabschnitten, Stegen, Rippen und dergleichen gebildete Verstärkungselemente 10, 11 usw. treten, so wie diese bei zumindest aus Kunststoff gefertigten Kindersitzklappen 1 bekannt sind.

In den nachfolgenden Patentansprüchen ist jedes Wandelemente 2 als "erstes Wandelement 2" und jedes Wandelement 6 als "zweites Wandelement 6" bezeichnet.
Ebenso ist jeder Zwischenraum 12 als "erster Zwischenraum 12" und jeder Zwischenraum 13 als "zweiter Zwischenraum 13" bezeichnet.

## Patentansprüche

1. Aus einem ersten und aus wenigstens einem zweiten Wandelement (2, 6) gebildeter Verbund (1), bei dem die Wandelemente (2, 6) entweder beweglich miteinander verbunden sind oder getrennt vorliegen und innerhalb eines gemeinsamen Bereiches (14) aus einer nicht raumsparenden Anordnung in eine raumsparende Anordnung überführbar sind, wobei das erste Wandelement (2) erste vertikale Verstärkungselemente (10) aufweist, die mit ersten horizontalen Verstärkungselementen (11) des ersten Wandelementes (2) kreuzweise verbunden sind und wobei das wenigstens eine zweite Wandelement (6) zweite vertikale Verstärkungselemente (10) aufweist, die mit zweiten horizontalen Verstärkungselementen (11) des wenigstens einen zweiten Wandelementes (6) kreuzweise verbunden sind, wobei bei jedem Wandelement (2, 6) die vertikalen Verstärkungselemente (10) auf den horizontalen Verstärkungselementen (11) aufliegen oder umgekehrt, und wobei jedes vertikale Verstärkungselement (10) mit wenigstens zwei horizontalen Verstärkungselementen (11) und jedes horizontale Verstärkungselement (11) mit mindestens zwei vertikalen Verstärkungselementen (10) so verbunden ist, dass an jedem Wandelement (2, 6) durch die vertikalen Verstärkungselemente (10) einerseits und durch die horizontale Verstärkungselemente (11) andererseits wenigstens ein erster, von den jeweiligen vertikalen Verstärkungselementen (10) gebildeter Zwischenraum (12) und wenigstens ein, von den jeweiligen horizontalen Verstärkungselementen (11) geschaffener zweiter Zwischenraum (13) gebildet ist und wobei die räumliche Dicke des wenigstens einen ersten Zwischenraums (12) durch die Dicke der jeweiligen vertikalen Verstärkungselemente (10) und die räumliche Dicke des wenigstens einen zweiten Zwischenraums (13) durch die Dicke der jeweiligen horizontalen Verstärkungselemente (11) bestimmt ist, **dadurch gekennzeichnet, dass** sich in der raumsparenden Anordnung der Wandelemente (2, 6) und innerhalb des gemeinsamen Bereiches (14) die zweiten vertikalen Verstärkungselemente (10) des wenigstens einen zweiten Wandelementes (6) ganz oder teilweise in wenigstens einem ersten Zwischenraum (12) des ersten Wandelementes (2) und die zweiten horizontalen Verstärkungselemente (11) des wenigstens einen zweiten Wandelementes (6) ganz oder teilweise in wenigstens einem zweiten Zwischenraum (13) des ersten Wandelementes (2) befinden.

2. Verbund nach Anspruch 1, **dadurch gekennzeichnet, dass** die vertikalen Verstärkungselemente (10) und die horizontalen Verstärkungselemente (11) unterschiedlich lang sind.

3. Verbund nach Anspruch 1, **dadurch gekennzeichnet, dass** das erste Wandelement (2) ein zum beweglichen Anordnen eines Sitzes (18) vorgesehenes drittes horizontales Verstärkungselement (11c) aufweist, ab dessen beiden Enden sich je ein erster Zwischenraum (12) anschließt, dass am zweiten Wandelement (6) ein zum weiteren Abstützen des Sitzes (18) vorgesehenes viertes horizontales Verstärkungselement (11b) angeordnet ist und am vierten horizontalen Verstärkungselement (11b) zwei zum seitlichen Begrenzen des Sitzes (18) bestimmte dritte vertikale Verstärkungselemente (10b) vorgesehen sind und dass sich in der raumsparenden Anordnung die dritten vertikalen Verstärkungselemente (10b) in den an das dritte horizontale Verstärkungselement (11c) sich anschließenden vertikalen Zwischenräumen (12) befinden.

4. Verbund nach Anspruch 3, **dadurch gekennzeichnet, dass** der lichte Abstand zwischen den beiden dritten vertikalen Verstärkungselementen (10b) größer ist als die Länge des dritten horizontalen Verstärkungselementes (11c).

5. Verbund nach Anspruch 3, **dadurch gekennzeichnet, dass** sich der Sitz (18) in der raumsparenden Anordnung der Wandelemente (2, 6) innerhalb von ersten Zwischenräumen (12) und/oder zweiten Zwischenräumen (13) befindet.

## Claims

1. Assembly (1) formed from one first and at least one second wall element (2, 6), in which assembly (1) the wall elements (2, 6) are either movably interconnected or are present so as to be separate and within a common region (14) are transferable from a non space-saving arrangement to a space-saving arrangement, wherein the first wall element (2) has first vertical reinforcement elements (10) which are connected in a cruciform manner to first horizontal reinforcement elements (11) of the first wall element (2) and wherein the at least one second wall element (6) has second vertical reinforcement elements (10) which are connected in a cruciform manner to second horizontal reinforcement elements (11) of the at least one second wall element (6), wherein in each wall element (2, 6) the vertical reinforcement elements (10) bear on the horizontal reinforcement elements (11), or vice versa, and wherein each vertical reinforcement element (10) is connected to at least two horizontal reinforcement elements (11) and each horizontal reinforcement element (11) is connected to at least two vertical reinforcement elements (10) such that on each wall element (2, 6), on account of the vertical reinforcement elements (10), on the one hand, and on account of the horizontal reinforcement elements (11), at least one first intermediate space (12), which is formed by the respective vertical reinforcement elements (10), and at least one first second intermediate space (13) which is created by the respective horizontal reinforcement elements (11), on the other hand, are formed, and wherein the spatial thickness of the at least one first intermediate space (12) is determined by the thickness of the respective vertical reinforcement elements (10) and the spatial thickness of the at least one second intermediate space (13) is determined by the thickness of the respective horizontal reinforcement elements (11), **characterized in that** in the space-saving arrangement of the wall elements (2, 6) and within the common region (14), the second vertical reinforcement elements (10) of the at least one second wall element (6) are entirely or partially located in at least one first intermediate space (12) of the first wall element (2) and the second horizontal reinforcement elements (11) of the at least one second wall element (6) are entirely or partially located in at least one second intermediate space (13) of the first wall element (2).

2. Assembly according to Claim 1, **characterized in that** the vertical reinforcement elements (10) and the horizontal reinforcement elements (11) are of different lengths.

3. Assembly according to Claim 1, **characterized in that** the first wall element (2) has a third horizontal reinforcement element (11c) which is provided for movably disposing a seat (18) and the two ends of which are adjoined in each case by a first intermediate space (12), **in that** a fourth horizontal reinforcement element (11b) which is provided for supporting the seat (18) is disposed on the second wall element (6), and two third vertical reinforcement elements (10b) specified for laterally restricting the seat (18) are provided on the fourth horizontal reinforcement element (11b), and **in that** the third vertical reinforcement elements (10b) in the space-saving arrangement are located in the vertical intermediate spaces (12) which adjoin the third horizontal reinforcement element (11c).

4. Assembly according to Claim 3, **characterized in that** the clear spacing between the two third vertical reinforcement elements (10b) is greater than the length of the third horizontal reinforcement element (11c).

5. Assembly according to Claim 3, **characterized in that** the seat (18) in the space-saving arrangement of the wall elements (2, 6) is located within first intermediate spaces (12) and/or second intermediate spaces (13).

## Revendications

1. Assemblage (1) formé d'un premier et d'au moins un deuxième élément de paroi (2, 6), dans lequel les éléments de paroi (2, 6) sont connectés l'un à l'autre de manière mobile ou se présentent sous forme séparée et peuvent être transférés à l'intérieur d'une région commune (14) d'un agencement non compact dans un agencement compact, le premier élément de paroi (2) présentant des premiers éléments de renfort verticaux (10) qui sont connectés en croix à des premiers éléments de renfort horizontaux (11) du premier élément de paroi (2) et l'au moins un deuxième élément de paroi (6) présentant des deuxièmes éléments de renfort verticaux (10) qui sont connectés en croix à des deuxièmes éléments de renfort horizontaux (11) de l'au moins un deuxième élément de paroi (6), les éléments de renfort verticaux (10), pour chaque élément de paroi (2, 6), s'appliquant sur les éléments de renfort horizontaux (11) ou inversement, et chaque élément de renfort vertical (10) étant connecté à au moins deux éléments de renfort horizontaux (11) et chaque élément de renfort horizontal (11) étant connecté à au moins deux éléments de renfort verticaux (10) de telle sorte qu'au niveau de chaque élément de paroi (2, 6), au moins un premier espace intermédiaire (12) formé par les éléments de renfort verticaux respectifs (10) et au moins un deuxième espace intermédiaire (13) réalisé par les éléments de renfort horizontaux respectifs (11) soient formés par les éléments de renfort verticaux (10) d'une part et par les éléments de renfort horizontaux (11) d'autre part et l'épaisseur spatiale de l'au moins un premier espace intermédiaire (12) étant déterminée par l'épaisseur des éléments de renfort verticaux respectifs (10) et l'épaisseur spatiale de l'au moins un deuxième espace intermédiaire (13) étant déterminée par l'épaisseur des éléments de renfort horizontaux respectifs (11), **caractérisé en ce que**, dans l'agencement compact des éléments de paroi (2, 6) et à l'intérieur de la région commune (14), les deuxièmes éléments de renfort verticaux (10) de l'au moins un deuxième élément de paroi (6) se trouvent complètement ou partiellement dans au moins un premier espace intermédiaire (12) du premier élément de paroi (2) et les deuxièmes éléments de renfort horizontaux (11) de l'au moins un deuxième élément de paroi (6) se trouvent complètement ou partiellement dans au moins un deuxième espace intermédiaire (13) du premier élément de paroi (2).

2. Assemblage selon la revendication 1, **caractérisé en ce que** les éléments de renfort verticaux (10) et les éléments de renfort horizontaux (11) sont de longueurs différentes.

3. Assemblage selon la revendication 1, **caractérisé en ce que** le premier élément de paroi (2) présente un troisième élément de renfort horizontal (11c) prévu pour l'agencement mobile d'un siège (18), aux deux extrémités duquel se raccorde à chaque fois un premier espace intermédiaire (12), **en ce qu'**au niveau du deuxième élément de paroi (6) est disposé un quatrième élément de renfort horizontal (11b) prévu pour un support supplémentaire du siège (18) et au niveau du quatrième élément de renfort horizontal (11b) sont prévus deux troisièmes éléments de renfort verticaux (10b) prévus pour assurer une limitation latérale du siège (18), et **en ce que** dans l'agencement compact, les troisièmes éléments de renfort verticaux (10b) se trouvent dans les espaces intermédiaires verticaux (12) se raccordant au troisième élément de renfort horizontal (11c).

4. Assemblage selon la revendication 3, **caractérisé en ce que** la distance intérieure entre les deux troisièmes éléments de renfort verticaux (10b) est supérieure à la longueur du troisième élément de renfort horizontal (11c).

5. Assemblage selon la revendication 3, **caractérisé en ce que** le siège (18), dans l'agencement compact des éléments de paroi (2, 6), se trouve à l'intérieur de premiers espaces intermédiaires (12) et/ou de deuxièmes espaces intermédiaires (13).
